# EUROPÄISCHE PATENTSCHRIFT

(11) **EP 0 582 962 B1**
(45) Veröffentlichungstag und Bekanntmachung des Hinweises auf die Patenterteilung: **19.02.1997**
(21) Anmeldenummer: 93112510.8
(22) Anmeldetag: 04.08.1993
(51) Int. Cl.: B65G 47/52, B65G 47/74, B65G 47/82

(54) **Vorrichtung zum Verbringen von Fördergut, insbesondere von Paketen, von einer ersten auf eine zweite Förderbahn**
Device for transferring articles, especially parcels, from a first conveyor onto a second one
Dispositif pour transférer des articles, notamment des paquets, d'un premier convoyeur à un second

(30) Priorität: 12.08.1992 DE 9210808 U
(43) Veröffentlichungstag der Anmeldung: 16.02.1994
(73) Patentinhaber: SIEMENS AKTIENGESELLSCHAFT, 80333 München (DE)
(72) Erfinder: Engelhardt, Alfred, Dipl.-Ing. (FH), D-91241 Kirchensittenbach (DE)

(56) Entgegenhaltungen:
- DE-A- 1 943 778
- DE-A- 2 063 282
- DE-A- 2 711 132
- DE-U- 1 895 576
- SOVIET INVENTIONS ILLUSTRATED Section PQ, Week 8444, 12. Dezember 1984 Derwent Publications Ltd., London, GB; Class Q35, AN 84-274815

## Beschreibung

Die Erfindung bezieht sich auf eine Vorrichtung zum Verbringen von Fördergut, insbesondere von Paketen, von einer ersten auf eine zweite Förderbahn mit zwei zumindest in einem Be-und Entladebereich parallel zueinander angeordneten, mit Rollenanordnungen versehenen Förderbahnen, einer im Be- und Entladebereich angeordneten Vorrichtung mit kammartigen, eine Auflageebene bildenden Zinken, die zwischen die Rollen der ersten Rollenanordnung passen und die quer zu den Förderbahnen bis über die Breite der zweiten Rollenanordnung bewegbar ist, wobei die erste Rolleneinrichtung oder die Zinken vertikal dergestalt gegeneinander bewegbar sind, daß die Zinken das Fördergut von der ersten Förderbahn abheben können.

Bei der fortschreitenden Automatisierung der Lagertechnik soll auch die Zusammenstellung der Waren zu lagerfähigen Einheiten automatisch abgewickelt werden. Dazu werden die einzulagernden Gegenstände, beispielsweise Pakete, im Wareneingang zunächst einzeln auf Endlosfördersysteme gegeben. Die Einlagerung einzelner Pakete ist aber äußerst aufwendig und für einheitliche rationelle Lagersysteme ungeeignet. Deshalb sollen die Waren bzw. Pakete zu lagerfähigen Einheiten zusammengestellt und in dafür vorgesehene Behälter verbracht werden. Die Behälter, die auf einem vom Fördersystem des Wareneingangs getrennten Fördersystem transportiert werden, sollen automatisch beladen werden.

Vorrichtungen der eingangs genannten Art sind aus der DE-U-18 95 576 und der SU-A-10 77 845 bekannt. Dabei wird zum Umlagern von Fördergut von einer ersten Rollenanordnung auf eine zweite Rollenanordnung eine kammartige, eine Auflageebene bildende Anordnung eingesetzt. Die Zinken der Kämme sind dabei in beiden Fällen zwischen den Rollen der Rollenanordnungen geführt.

Wenn im Interesse einer Bewegungsentkopplung die Lastübernahme vom Kamm mit Hilfe von Stempeln in der zweiten Förderbahn erfolgen soll, würde sich für den Fachmann als naheliegend anbieten, sowohl die Stempel als auch die Zinken der kammförmigen Anordnung zwischen den Rollen beider Förderbahnen vorzusehen. Eine resultierende Anordnung müßte dann so ausgebildet sein, daß die Rollen der ersten Förderbahnen und der zweiten Förderbahn in ihren Längsachsen korrespondieren, so daß zwischen den jeweils benachbarten Rollen nebeneinander jeweils eine Zinke und eine Stempelanordnung vorzusehen wäre. Dadurch würde allerdings die Anzahl von Rollen pro Längeneinheit deutlich reduziert, was im Interesse einer gleichmäßigen Lastverteilung ungünstig wäre.

Ferner ist es aus der DE-A-20 63 282 bekannt, für Umlagervorgänge eine zinkenförmige Anordnung und eine stempelförmige Anordnung zusammenwirken zu lassen. Dabei sind die Zinken und die Stempel jeweils als Rollbänder ohne seitlichen Versatz ausgebildet.

Aufgabe der Erfindung ist deshalb die Schaffung einer Vorrichtung zum Verbringen von Fördergut von einer ersten auf eine zweite Förderbahn.

Diese Aufgabe wird für eine Vorrichtung der eingangs genannten Art durch die kennzeichnenden Merkmale des Hauptanspruchs gelöst.

Nach einer vorteilhaften Ausbildung der Erfindung ist die erste Förderbahn vor dem Be- und Entladebereich so ausgebildet, daß das Fördergut neben einer Kraftkomponente in Förderrichtung auch eine Querkraft in Richtung einer seitlich an der Förderbahn angebrachten Begrenzung erfährt. Damit wird das Fördergut ausgerichtet und geordnet in den Be- und Entladebereich eingebracht. Die Ausrichtung des Förderguts läßt sich am einfachsten durch eine Förderbahn mit schräg angeordneten Rollen vor dem Be- und Entladebereich erzielen.

Nach einer weiteren vorteilhaften Ausbildung der Erfindung weist die erste Förderbahn vor dem Be- und Entladebereich zwei in Förderrichtung beabstandet angebrachte Strichcodeleser auf, wobei zwischen den Strichcodelesern ein steuerbarer Queranschlag vorgesehen ist, der seitlich zur ersten Förderbahn einbringbar ist. Wenn im Strichcode des Förderguts oder Pakets eine Information über die Größe und des Gewichts des Pakets enthalten ist, dann können diese Informationen über den ersten Strichcodeleser dem Paket entnommen werden. Somit kann festgestellt werden, ob das Paket zur Zusammenstellung für eine lagerfähige Einheit geeignet ist und ob es die richtige Lage auf der Förderbahn eingenommen hat. Falls letzteres nicht zutreffen sollte, kann der steuerbare Queranschlag seitlich zur Förderbahn eingebracht werden, so daß das Paket ein Drehmoment erfährt und um 90° gedreht wird.

Nach einer weiteren vorteilhaften Ausbildung der Erfindung können im Be- und Entladebereich Mittel vorgesehen sein, beispielsweise Lichtschranken oder Längenmeßvorrichtungen, mit denen Feststellbar ist, ob die Länge des Be- und Entladebereichs nicht überschritten wird. Damit ist eine einwandfreie Handhabung durch die Vorrichtung gewährleistet. Am Ende des Be- und Entladebereichs der Förderbahnen kann jeweils ein versenkbarer Anschlag vorgesehen sein, durch den sichergestellt wird, daß die lagerfähigen Einheiten oder die Behälter im Be- und Entladebereich zum Stillstand kommen.

Ein für die Vorrichtung besonders geeigneter Behälter zur Aufnahme der lagerfähigen Einheiten, d.h. des in die zweite Förderbahn verbrachten Förderguts, weist im Behälterboden Ausnehmungen für die Stege der vertikal bewegbaren Vorrichtung auf.

Ein Ausführungsbeispiel der Erfindung wird im folgenden anhand der Zeichnung näher beschrieben. Dabei zeigen:
- FIG 1: eine Draufsicht auf zwei parallele Förderbahnen F1, F2 mit einem gemeinsamen Be- und Entladebereich B,
- FIG 2: die Seitenansicht gemäß FIG 1.

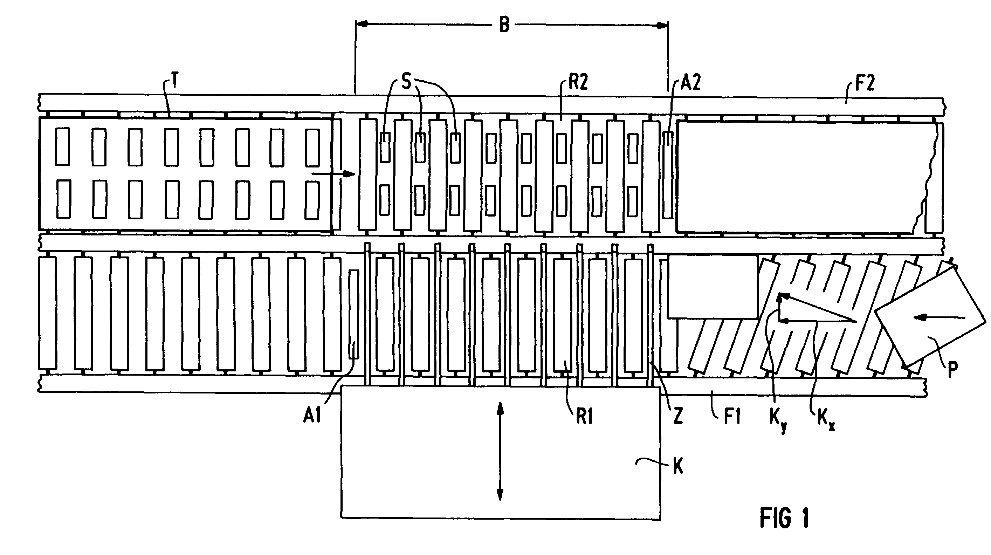

FIG 1 zeigt einen Ausschnitt aus zwei parallel nebeneinander geführten Förderbahnen F1, F2, die als Rollenförderer ausgebildet sind. Die Förderbahn F2 könnte auch als Tragkettenförderer ausgebildet sein. Ein Teilbereich der Förderbahnen F1, F2 stellt einen Be- und Entladebereich B dar. Die Förderrichtung der ersten Förderbahn F1 verläuft von rechts nach links und die Förderbahn der zweiten Förderbahn F2 von links nach rechts. Es wäre aber auch möglich, daß beide Förderbahnen die gleiche Förderrichtung haben. Auf der ersten Förderbahn F1 werden Pakete P in Richtung des Be- und Entladebereichs B transportiert. Die Pakete P werden beispielsweise in einer nicht gezeigten Wareneingangsstation beliebig auf das Förderband F1 geladen, so daß sie mit unterschiedlicher Orientierung in Richtung des Be- und Entladebereichs B transportiert werden.

Im Be- und Entladebereich sollen in der Regel mehrere Pakete P zu lagerfähigen Einheiten zusammengestellt werden. Damit mehrere Pakete P möglichst kompakte lagerfähige Einheiten bilden, ist im Bereich der Förderbahn F1 vor dem Be- und Entladebereich B ein Rollenförderer mit schräggestellten Rollen vorgesehen. Dadurch erfahren die Pakete neben einer Kraftkomponente Kₓ in Förderrichtung auch eine Querkraftkomponente K_{y}, so daß sie in Richtung der seitlichen Begrenzung der Förderbahn F1 bewegt und an dieser parallel ausgerichtet werden. Die Pakete P werden dann in den Be-und Entladebereich bis zu einem Anschlag A1 eingefördert. Der Anschlag A1 ist dabei versenkbar ausgebildet, und kann, wenn Unregelmäßigkeiten im Bereich B auftreten, beispielsweise wenn die im Be- und Entladebereich befindlichen Pakete keine lagerfähige Einheit bilden, versenkt werden, so daß die Pakete über einen weiteren Rollenförderer, der als Schwerkraftförderer ausgebildet sein kann, aus dem Be- und Entladebereich B ausgeschleußt werden können.

Im Be- und Entladebereich B befindet sich eine kammartig ausgebildete Vorrichtung K, die aus einer Platte besteht, aus der Zinken Z heraus und in den Be- und Entladebereich B der ersten Förderbahn F1 hineinragen. Die Zinken sind dabei zwischen den Rollen des Bereichs B angeordnet. Im Förderzustand liegt die Oberkante der Zinken unter der durch die Rollenanordnung R1 gebildeten Förderebene. Die Rollenanordnung R1 der Förderbahn F1 im Bereich B ist versenkbar ausgeführt, so daß sich die Rollen unter die kammartige Vorrichtung versenken lassen.

Die Förderbahn F2 weist im Bereich B ebenfalls eine Rollenanordnung R2 auf, wobei die Drehachsen der Rollen genau zwischen den Drehachsen der Rollen der Förderbahn F1 liegen. Unterhalb der Rollenanordnung R2 befindet sich eine höhenverstellbare Vorrichtung die Stege S aufweist die zwischen den Rollen durchführbar sind.

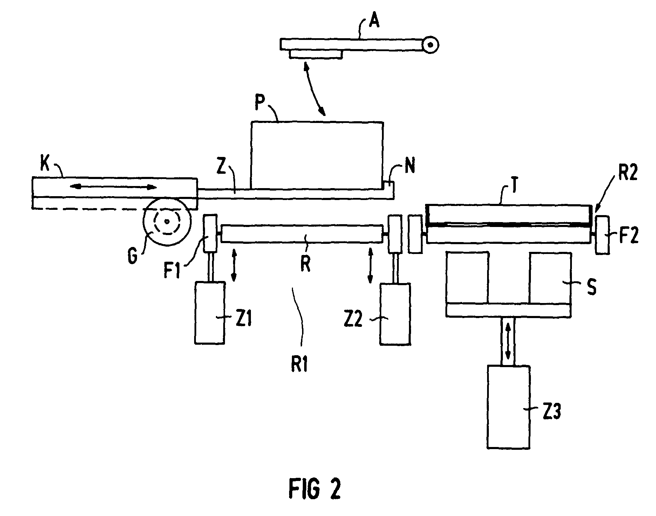

Auf der Förderbahn F2 wird ein Behälter T von links nach rechts in den Bereich B eingebracht. Dieser Behälter weist Durchführungen auf, deren Querschnitt größer als der Querschnitt der Stege S ist und die so angeordnet sind, daß wenn sich der Behälter T im Bereich B befindet, die Stege S der höhenverstellbaren Vorrichtung durch die Aussparungen im Behälterboden hindurchgeführt werden können. Die Funktionsweise der Vorrichtung wird anhand von FIG 2 näher erläutert.

FIG 2 zeigt eine schematische Seitenansicht des aus FIG 1 bekannten Be- und Entladebereiches B. Die kammartige Vorrichtung K mit den daran befestigten Zinken Z ist, wie durch das Getriebe G angedeutet, quer zu den Förderbahnen F1 und F2 bewegbar. Die Zinken Z bilden die Auflagefläche für die Pakete P und weisen an ihrem Ende eine Nase N als Anschlag für diese auf. Unterhalb der Zinken Z befindet sich die erste Rollenanordnung R1 der ersten Förderbahn F1, die, wie durch die Zylinder Z1 und Z2 angedeutet, höhenverstellbar ist. Die zweite Rollenanordnung R2 der Förderbahn F2 ist fest angeordnet. Auf ihr befindet sich ein - im Schnitt dargestellter - Behälter T. Unterhalb der zweiten Rollenanordnung R2 befindet sich eine über einen Zylinder Z3 höhenverstellbare Vorrichtung mit zwei parallelen Reihen von beabstandet angeordneten Stegen S befindet.

Wenn die Pakete P in den Be- und Entladebereich B gefördert werden, befindet sich die Rollenanordnung R1 in ihrer Hochposition, in der die obere Rollenebene über der durch die Zinken Z gebildeten Auflagefläche für die Pakte P liegt. Nachdem die Pakete P sich vollständig im Be- und Entladebereich B befinden, wird die Rollenanordnung R1 unter die Zinken Z gesenkt, so daß die Pakete P auf der durch die Zinken Z gebildeten Auflagefläche zu liegen kommen. Anschließend wird die kammartige Vorrichtung K mittels des Getriebes G in Richtung der zweiten Förderbahn F2 bewegt. Wenn sich die Pakete P über der zweiten Rollenanordnung R2 befinden, wird die höhenverstellbare Vorrichtung mit den Stegen S nach oben ausgefahren, wobei die Stege S durch die Zwischenräume der Rollen, die Aussparungen des Behälters B und zwischen die Zinken Z der kammartigen Vorrichtung K greifen, so daß die Pakete P auf den Stegen S zur Auflage kommen. Anschließend wird die kammartige Vorrichtung K nach links zurückgezogen, worauf die Vorrichtung mit den Stegen S abgesenkt wird, so daß die Pakete P in dem Behälter T zur Auflage kommen. Zur Justierung der Pakete P im Behälter T kann noch der drehbare Anschlag A eingeschwenkt werden, der von links nach rechts Druck auf die äußeren Seitenwände der Pakete P ausübt. Danach wird der Behälter T durch Versenken des aus FIG 1 bekannten Anschlags A2 freigegeben, aus dem Be- und Entladebereich gefördert und einem Regelbediengerät zur Ablage in einem Regalfach zugeführt.

## Patentansprüche

1. Vorrichtung zum Verbringen von Fördergut (P), insbesondere von Paketen, von einer ersten auf eine zweite Förderbahn (F1,F2) mit zwei zumindest in einem Be- und Entladebereich (B) parallel zueinander angeordneten, mit Rollenanordnungen (R1,R2) versehenen Förderbahnen (F1,F2), einer im Be- und Entladebereich (B) angeordneten Vorrichtung mit kammartigen, eine Auflageebene bildenden Zinken (Z), die zwischen die Rollen der ersten Rollenanordnung passen und die quer zu den Förderbahnen (F1,F2) bis über die Breite der zweiten Rollenanordnung (R2) bewegbar ist, wobei die erste Rolleneinrichtung (R1) oder die Zinken (Z) vertikal dergestalt gegeneinander bewegbar sind, daß die Zinken das Fördergut (P) von der ersten Förderbahn (F1) abheben können, **dadurch gekennzeichnet,** daß die Zinken (Z) über die Rollen der zweiten Rollenanordnung (R2) führbar sind und daß bei der zweiten Rollenanordnung (R2) ausfahrbare Stege (S) zwischen deren Rollen und damit auch zwischen den Zinken (Z) vorgesehen sind, die zur Fördergutübernahme von den Zinken (Z) über die Auflageebene der Zinken (Z) bewegbar sind und dann nach Rückzug der Zinken ein Absenken des Förderguts auf die zweite Rollenbahn (R2) ermöglichen.

2. Vorrichtung nach Anspruch 1, wobei die erste Förderbahn (F1) vor dem Be- und Entladebereich (B) so ausgebildet ist, daß das Fördergut (P) neben einer Kraftkomponente (Kₓ) in Förderrichtung auch eine Querkraft (K_{y}) in Richtung einer seitlich an der Förderbahn (F1) angebrachten Begrenzung erfährt.

3. Vorrichtung nach Anspruch 2, wobei die Förderbahn (F1) schräg angeordnete Rollen aufweist.

4. Vorrichtung nach Anspruch 2 oder 3, wobei die erste Förderbahn (F1) vor dem Be- und Entladebereich (B) zwei in Förderrichtung beabstandet angebrachte Strichcode-Leser (C1, C2) aufweist und wobei zwischen den Strichcode-Lesern (C1, C2) ein steuerbarer Queranschlag (Q) vorgesehen ist, der seitlich zur ersten Förderbahn (F1) einbringbar ist.

5. Vorrichtung nach einem der vorstehenden Ansprüche, wobei im Be- und Entladebereich (B) der ersten Förderbahn (F1) Mittel vorgesehen sind, mit denen feststellbar ist, ob die Länge des Be- und Entladebereichs (B) nicht überschritten wird.

6. Vorrichtung nach einem der vorstehenden Ansprüche, wobei am Ende des Be- und Entladebereichs (B) der Förderbahnen je ein versenkbarer Anschlag (A1,A2) vorgesehen ist.

7. Vorrichtung nach einem der vorstehenden Ansprüche mit einem Behälter zur Aufnahme des in die zweite Förderbahn (F2) verbrachten Förderguts (P), wobei im Behälterboden Ausnehmungen für die Stege (S) der vertikal bewegbaren Vorrichtung vorgesehen sind.

## Claims

1. Arrangement for transferring goods to be conveyed (P), in particular parcels, from a first conveyor (F1) to a second conveyor (F2), having two conveyors (F1, F2) which are arranged so as to be parallel to each other at least in a loading and unloading zone (B) and which are provided with roller arrangements (R1, R2), having an arrangement which is provided in the loading and unloading zone (B) and which has comb-like prongs (Z) which form a support plane, fit between the rollers of the first roller arrangement and can be moved transversely relative to the conveyors (F1, F2) as far as across the width of the second roller arrangement (R2), with it being possible to move the first roller device (R1) or the prongs (Z) vertically relative to each other in such a way that the prongs can lift the goods to be conveyed (P) off the first conveyor (F1), characterised in that the prongs (Z) can be guided over the rollers of the second roller arrangement (R2), and in that in the case of the second roller arrangement (R2) cross-pieces (S), which can be moved out, are provided between the rollers thereof and thus also between the prongs (Z), which cross-pieces can be moved over the support plane of the prongs (Z) for the purpose of taking over from the prongs (Z) the goods, which are to be conveyed, and then after withdrawal of the prongs make it possible to lower the goods, which are to be conveyed, onto the second roller conveyor (R2).

2. Arrangement according to claim 1, wherein the first conveyor (Fl) before the loading and unloading zone (B) is formed in such a way that the goods to be conveyed (P) in addition to experiencing a force component (Kₓ) in the conveying direction also experience a transverse force (K_{y}) in the direction of a limitation laterally fixed on the conveyor (F1).

3. Arrangement according to claim 2, wherein the conveyor (F1) has obliquely arranged rollers.

4. Arrangement according to claim 2 or 3, wherein the first conveyor (F1) before the loading and unloading zone (B) has two bar-code readers (C1, C2) which are fixed so as to be spaced apart in the conveying direction and wherein provided between the bar-code readers (C1, C2) there is a controllable transverse stop (Q) which can be introduced laterally relative to the first conveyor (F1).

5. Arrangement according to one of the preceding claims, wherein provided in the loading and unloading zone (B) of the first conveyor (F1) there are means with which it is possible to ascertain whether or not the length of the loading and unloading zone (B) has been exceeded.

6. Arrangement according to one of the preceding claims, wherein provided at the end of the loading and unloading zone (B) of the conveyors there is a respective stop (A1, A2) which can be lowered.

7. Arrangement according to one of the preceding claims having a container to receive the goods (P) which are to be conveyed and which have been transferred to the second conveyor (F2), wherein cutouts for the cross-pieces (S) of the vertically movable arrangement are provided in the base of the container.

## Revendications

1. Dispositif destiné à transférer des articles (P), notamment des paquets, d'un premier à un second convoyeur (F1,F2), comportant deux convoyeurs (F1,F2), disposés parallèlement l'un à l'autre au moins dans une région (B) de chargement et de déchargement et munis de dispositifs (R1,R2) de roulement, un dispositif disposé dans la région (B) de chargement et de déchargement comportant des dents (Z) formant un plan d'appui, du type peigne, ce dispositif s'adaptant entre les rouleaux du premier dispositif de roulement et étant mobile transversalement aux convoyeurs (F1,F2) jusqu'au-dessus de la largeur du second dispositif (R2) de roulement, le premier dispositif (R1) de roulement ou les dents (Z) étant mobiles verticalement l'un par rapport à l'autre, de sorte que les dents peuvent soulever l'article (P) du premier convoyeur (F1), caractérisé en ce que les dents (Z) peuvent être guidées au dessus des rouleaux du second dispositif (R2) de roulement et en ce qu'il est prévu des barrettes (S) pouvant être déployées dans le second dispositif (R2) de roulement entre les rouleaux de ce dernier et donc également entre les dents, ces barrettes étant mobiles pour la réception de l'article par les dents au-dessus du plan d'appui des dents (Z) et permettant, après le retour des dents, un abaissement de l'article sur le second dispositif de roulement (R2).

2. Dispositif suivant la revendication 1, dans lequel le premier convoyeur (F1) est formé avant la région (B) de chargement et de déchargement de manière que l'article (P) subit, outre une composante (Kₓ) de force suivant la direction de transport, également une force (K_{y}) transversale dans la direction d'une délimitation montée latéralement au convoyeur (F1).

3. Dispositif suivant la revendication 2, dans lequel le convoyeur (F1) comporte des rouleaux inclinés.

4. Dispositif suivant la revendication 2 ou 3, dans lequel le premier convoyeur (F1) comporte, avant la région (B) de chargement et de déchargement deux lecteurs (C1,C2) de code-barre montés à distance suivant la direction de transport, et dans lequel il est prévu une butée (Q) transversale pouvant être commandée entre les lecteurs (C1,C2) de code-barre, cette butée pouvant être insérée latéralement par rapport au premier convoyeur (F1).

5. Dispositif suivant l'une des revendications précédentes, dans lequel il est prévu dans la région (B) de chargement et de déchargement du premier convoyeur (F1) des moyens qui permettent de constater si la longueur de la région (B) de chargement et de déchargement n'est pas dépassée.

6. Dispositif suivant l'une des revendications précédentes, dans lequel il est prévu, à l'extrémité de la région (B) de chargement et de déchargement des convoyeurs, respectivement une butée (A1,A2) pouvant être abaissée.

7. Dispositif suivant l'une des revendications précédentes, comportant un récipient pour recevoir l'article (P) transféré dans le second convoyeur (F2), des évidements étant prévus dans le fond du récipient pour les barrettes (S) du dispositif mobile verticalement.
